# EUROPÄISCHE PATENTANMELDUNG

(11) **EP 4 231 659 A1**
(43) Veröffentlichungstag der Anmeldung: **23.08.2023**
(21) Anmeldenummer: 22157470.0
(22) Anmeldetag: 18.02.2022
(51) Int. Cl.: H04Q 9/00

(54) **ÜBERTRAGUNG VORVERARBEITETER SENSORDATEN UNTER EINBEZUG DER DATENQUALITÄT**

(71) Anmelder: Siemens Aktiengesellschaft, 80333 München (DE)
(72) Erfinder: Scholl, Christoph, 91301 Forchheim (DE); Ludwig, Klaus, 91058 Erlangen (DE); Tobola, Andreas, 91058 Erlangen (DE)
(74) Vertreter: Siemens Patent Attorneys

(57) **Zusammenfassung**

Die Erfindung betrifft ein Verfahren zur Übertragung von vorverarbeiteten Sensordaten mit den Schritten:
- Messen (S1) von Messwerten durch eine Sensoreinheit, wobei den Messwerten eine vorhandene Datenqualität, welche ein Qualitätsmaß der Messwerte ist, zugeordnet ist,
- Empfangen (S2) einer von einem Empfänger geforderte Datenqualität,
- Verarbeiten (S3) der Messwerte in Abhängigkeit der vorhandenen Datenqualität und der geforderten Datenqualität zu vorverarbeiteten Sensordaten und
- Senden (S4) der vorverarbeiteten Sensordaten und der vorhandenen Datenqualität an den Empfänger.

Außerdem betrifft die Erfindung eine zugehörige Sensoreinheit und ein zugehöriges System.

## Beschreibung

### HINTERGRUND DER ERFINDUNG

### Gebiet der Erfindung

Die vorliegende Erfindung betrifft ein Verfahren zur Übertragung vorverarbeiteter Sensordaten. Die Erfindung betrifft außerdem eine zugehörige Sensoreinheit und ein zugehöriges System.

### Beschreibung des Stands der Technik

In heterogenen Systemen in Internet-of-Things-Umgebungen (I-oT-Umgebungen) werden große Mengen an Daten erzeugt und verarbeitet.

Die Weitergabe von Sensordaten, auch als Messwerte bezeichenbar, aus der Feldebene über Gateway-Geräte in die Cloud erfolgt oft ungeprüft unter Vernachlässigung eventueller Probleme hinsichtlich Datenqualität. Zusätzlich werden aus Kostengründen, insbesondere Energiebudget des Sensorsystems oder aus Gründen der Kommunikationsbandbreite, nur einzelne Datenpunkte oder ein vorverarbeiteter aggregierter oder komprimierter Wert übertragen. Dadurch geht dem Messwert Information im Vergleich zu den Rohdaten verloren. Durch die bereits komprimierte Übertragung der Sensordaten ist eine nachträgliche Diagnose im besten Fall nur noch schwer möglich, meist jedoch gar nicht.

Die Aufgabe der Erfindung besteht darin, eine Lösung für eine verbesserte Übertragung von Sensordaten bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zur Übertragung von vorverarbeiteten Sensordaten mit den Schritten:
- Messen von Messwerten durch eine Sensoreinheit, wobei den Messwerten eine vorhandene Datenqualität, welche ein Qualitätsmaß der Messwerte ist, zugeordnet ist,
- Empfangen einer von einem Empfänger geforderte Datenqualität,
- Verarbeiten der Messwerte in Abhängigkeit der vorhandenen Datenqualität und der geforderten Datenqualität zu vorverarbeiteten Sensordaten und
- Senden der vorverarbeiteten Sensordaten und der vorhandenen Datenqualität an den Empfänger.

Ein Aspekt der Erfindung besteht somit darin, dass das Senden der Daten an den Empfänger in Abhängigkeit der von diesem geforderten Datenqualität erfolgt.

Das Empfangen der von dem Empfänger geforderte Datenqualität kann insbesondere von einem Speicher oder direkt von Empfänger erfolgen.

Der Empfänger definiert über die geforderte Datenqualität Anforderungen an ein Mindestmaß an Datenqualität. Ist die Datenqualität höher als vom Empfänger vorgegeben, so können die Sensordaten, auch als Daten bezeichenbar, an den Empfänger schnellstmöglich versendet werden. Ist die Datenqualität niedriger als die vom Empfänger vorgegebene Schwelle, so können diese Daten auf der Sensoreinheit, auch als Sender bezeichenbar oder einem Sensorsystem gespeichert werden.

Der Empfänger kann außerdem bei Bedarf, insbesondere sobald die außerdem empfangene Datenqualität ein Mindestmaß unterschreitet, vom Sender zwischengespeicherten Sensordaten ganz oder teilweise anfordern, die mit der schlechten Datenqualität in Zusammenhang stehen. Es können dabei zusätzliche Daten oder die Rohdaten statt aggregierten Daten angefordert werden.

Ein Vorteil der Erfindung ist es, dass eine den Sensorsignalen zugewiesene Bewertung der Datenqualität in der weiteren Verarbeitungskette genutzt wird, um die Kommunikation des Sensors zu steuern.

In einer Weiterbildung der Erfindung weist das Verfahren die weiteren Schritte auf:
- Empfangen einer Rückmeldung von dem Empfänger,
- Verarbeiten der Messwerte in Abhängigkeit der Rückmeldung zu weiteren vorverarbeiteten Sensordaten und
- Senden der weiteren vorverarbeiteten Sensordaten und der vorhandenen Datenqualität an den Empfänger.

Insbesondere für den Fall einer schlechten Datenqualität kann der Empfänger der vorverarbeiteten Sensordaten nachträglich zusätzliche Sensordaten anfordern. Der Sensor kann hierzu über einen bestimmten Zeitraum Daten aus der Vergangenheit im Sensorsystem vorhalten. Diese zusätzlichen Daten können dann zu Diagnose- und Dokumentationszwecken abgelegt und weiterverarbeitet werden. Dies hat den Vorteil, dass dadurch eine Rückführbarkeit von Ereignissen, insbesondere Fehler, auf konkrete Sensordaten ermöglicht wird.

In einer weiteren Weiterbildung der Erfindung weist das Verfahren die weiteren Schritte auf:
- Empfangen einer zweiten Rückmeldung von dem Empfänger und
- Senden der Messwerte und der vorhandenen Datenqualität an den Empfänger.

Insbesondere für den Fall einer schlechten Datenqualität kann der Empfänger der vorverarbeiteten Sensordaten nachträglich zusätzliche Sensordaten anfordern. Dies können nach dieser Ausführungsform insbesondere Rohdaten im unverarbeiteten Zustand sein.

Der Empfänger kann dazu darüber hinaus über einen Regelalgorithmus verfügen, der dafür sorgt, dass die verfügbaren Ressourcen des Sensorsystems, insbesondere verfügbares Energiebudget, maximale Kommunikationsdatenrate, interner Speicher für die Zwischenspeicherung, nicht überschritten werden. Bei den gespeicherten Daten handelt es sich um unverarbeitete Daten, als auch um verarbeitete Daten, mit den dazugehörigen Metainformationen, wie insbesondere Zeitstempel und Qualitätsinformationen.

Der Sender, d.h. die Sensoreinheit, kann auf Basis eigener Einschränkungen, insbesondere verfügbares Energiebudget, maximaler Kommunikationsdatenrate, Anforderungen von Sensorsignalen ablehnen. Die kann der Fall sein, falls die Verarbeitung der zusätzlichen Datenqualitätsinformationen oder ein Versenden der zeitlich zurückliegenden Werte, die Kernfunktion des Sensors gefährden würde.

Abhängig von den Anforderungen an die Datenqualität kann der Empfänger auch nur einen Teil der Sensordaten zu diagnosezwecken anfordern. In einer Ausführungsform könnte, wenn die geforderte Datenqualität nur minimal nicht erreicht, der Empfänger nur den Wert anfordern, der die schlechte Datenqualität verursacht hat. Der zusätzlich angeforderte Teil der Daten kann auch mit einem Start- und Endzeitpunkt, d.h. ersten Datenpunkt und letzten Datenpunkt, spezifiziert werden.

In einer weiteren Weiterbildung der Erfindung weist das Verfahren den weiteren Schritt auf:
- Speichern der Messwerte durch die Sensoreinheit.

Nach dieser Ausführungsform kann der Messwert in einen Speicher der Sensoreinheit gespeichert werden.

Zusätzlich kann der Empfänger in dieser Ausführungsform vorgeben, welche Daten, die als schlechte Qualität markiert sind und damit nicht sofort versendet wurden, gespeichert werden. Das können alle Daten sein oder eine Auswahl basierend auf der Qualität und dem Datentyp.

Der Sender ist in der Lage im internen Speicher, Messergebnisse aus vergangenen Messungen vorzuhalten und bei Bedarf und auf spezielle Anforderung über die Kommunikationsschnittstelle zu versenden.

Der interne Speicher des Senders kann in Abhängigkeit der vorliegend Datenqualität dahingehend verwaltet werden, dass abhängig von der vorliegenden Datenqualität Werte mit einer höheren Abtastrate, insbesondere bei einer schlechteren Datenqualität DQ oder mit einer niedrigeren Abtastrate, insbesondere bei einer höheren Datenqualität, abgespeichert werden. Durch die höhere Abtastrate werden somit bei geringerer Datenqualität mehr Werte gespeichert.

Per Algorithmus kann der Empfänger eigenständig entscheiden welche Werte mit welcher Speichertiefe gespeichert werden. Insbesondere kann er, wenn ein bestimmter Qualitätswert, d.h. die Datenqualität, eine Schwelle unterschreitet, die anderen verfügbaren Qualitätswerte aber keine Verschlechterung zeigen, den verfügbaren Speicher des Senders nur für den schlechteren Wert einsetzten. Dies gilt ebenso für die Basisdaten, aus denen der Qualitätswert berechnet wird. Diese Funktion ist abschaltbar.

In einer weiteren Weiterbildung der Erfindung verwenden die Sensoreinheit und der Empfänger das gleiche Kommunikationsprotokoll. Dies hat den Vorteil eines unkomplizierten Datenaustauschs.

In einer weiteren Weiterbildung der Erfindung wird die vorhandene Datenqualität von der Sensoreinheit bestimmt. Dies hat den Vorteil, dass sich die Sensoreinheit selbst über die Qualität, der von ihr erfassten Daten, bewusst ist. In Abhängigkeit der vorhanden Datenqualität kann das Senden der Daten erfolgen.

In einer weiteren Weiterbildung der Erfindung wird die vorhandene Datenqualität durch:
- einen Algorithmus zur Anomaliedetektion und/oder
- einen maschinellen Lernalgorithmus
   bestimmt.

Der Lernalgorithmus könnten im speziellen ein Neuronales Netz oder eine One-Class Support Vector Maschine sein.

Unter Datenqualität wird im Sinne der vorliegenden Erfindung eine Qualität, der durch die Sensoreinheit erfassten Messwerte verstanden. Die Qualität beschreibt, wie genau die, die Messwerte betreffenden Größen erfasst werden. Die Größen können insbesondere Temperatur, Feuchtigkeit, elektrische Spannung, magnetfeldstärke, Erschütterung, Vibration und/oder Beschleunigung betreffen. Eine höhere Datenqualität bedeutet, dass die erfassten Messwerte, den real vorliegenden Werten mit einer geringeren Abweichung bzw. einer höheren Übereinstimmung entsprechen als bei einer niedrigeren Datenqualität. Die Datenqualität kann durch Alterung der Sensoreinheit und/oder Einflüsse durch Umgebungsbedingungen negativ beeinflusst werden.

Im Folgenden ist eine mögliche Definition der Datenqualität beschrieben. Die Datenqualität besteht aus mindestens einem Wert, insbesondere jedoch aus einem Tupel an zusammengehörigen Werten, die als solches die Qualität der gemessenen Daten beschreiben. Jedes Datum (Zeitreihe, berechneter Wert) hat sein spezifisches Tupel, welches die Qualität dieses Datums bewertet.

Ein Tupel Q kann vorzugsweise aus drei Qualitätswerten Q1, Q2 und Q3 bestehen: QA = (QA1, QA2, QA3), wobei das Tupel QA die Qualität eines Parameters A beschreibt. Mehr oder weniger als drei Qualitätswerte sind ebenso möglich.

Der Wertebereich der Datenqualität bewegt sich in der Regel im Intervall (0,1), wobei 0 die schlecht möglichste Datenqualität ist und 1 die bestmögliche Datenqualität, wobei die Datenqualität nicht in diesem Bereich liegen muss.

Der Empfänger definiert für alle Elemente in einem Tupel Schwellwerte der Datenqualität für
1) Daten die unverzüglich vom Sender an den Empfänger versendet werden.
2) Für die verbleibenden Daten, also für die Daten, die gespeichert werden sollen, kann der Empfänger auf die gleiche Art eine Grenze festlegen. Dabei kann er auch eine Auswahl über die Datenart treffen unabhängig von der Qualität, insbesondere nur einen bestimmten Datentyp auswählen. Macht der Empfänger hierzu keine Angaben, so werden alle Daten gespeichert, solange der Speicher reicht.

In einer weiteren Weiterbildung der Erfindung ist der Empfänger als:
- Gateway-Gerät,
- Cloud-Server,
- Fog-Server oder
- Edge-Device
   ausgebildet.

In einer weiteren Weiterbildung der Erfindung weist das Verfahren den weiteren Schritt auf:
- Abrufen von gewünschten Sendeintervallen vom Empfänger.

Dies hat den Vorteil, dass vom Empfänger festgelegt wird, wann und indirekt auch wie oft und wie viele Daten er erhält. In einer weiteren Weiterbildung der Erfindung werden mit den vorverarbeiteten Sensordaten außerdem Daten aus dem Schritt des Verarbeitens der Messwerte in Abhängigkeit der vorhandenen Datenqualität und des geforderten Datenqualität gesendet. Dies hat den Vorteil, dass der Empfänger außerdem Daten zu der Art und Weise wie die Messwerte vorverarbeitet sind erhält.

In einer weiteren Weiterbildung der Erfindung umfasst das Verarbeiten der Sensordaten:
- eine Aggregation und/oder
- eine Filterung und/oder
- eine Komprimierung und/oder
- eine Berechnung des Root-Means-Square-Values (RMS-Wert). Dies hat den Vorteil, dass die Größe der zu sendenden Daten reduziert wird.

In einer weiteren Weiterbildung der Erfindung weist das Verfahren den weiteren Schritt auf:
- Empfangen einer Qualitätsskala anhand welcher die Datenqualität skaliert ist.

Dies hat den Vorteil, dass der Sender und Empfänger ein gleich skaliertes Maß für die Datenqualität verwenden und somit unter einer guten oder weniger guten Datenqualität dasselbe verstehen. Dies kann durch maschinelles Lernen umgesetzt sein.

Dieser Schritt kann auch ein Aushandeln der Datenqualität zwischen dem Empfänger und Sender umfassen.

Insbesondere kann der Empfänger auch verschiedene Kategorien von Datenqualitätswerten berechnen.

Die Erfindung umfasst außerdem eine Sensoreinheit ausgebildet ein erfindungsgemäßes Verfahren auszuführen.

In einer Weiterbildung der Erfindung weist die erfindungsgemäße Sensoreinheit folgende Komponenten auf:
- ein Messelement, ausgebildet, Messwert zu messen, wobei den Messwerten eine vorhandene Datenqualität, welche ein Qualitätsmaß der Messwerte ist, zugeordnet ist,
- eine Empfangseinheit, ausgebildet, eine von einem Empfänger geforderte Datenqualität zu empfangen,
- eine Verarbeitungseinheit, ausgebildet, die Messwerte in Abhängigkeit der vorhandenen Datenqualität und der geforderten Datenqualität zu vorverarbeiteten Sensordaten zu verarbeiten und
- eine Sendeeinheit, ausgebildet, die vorverarbeiteten Sensordaten und die vorhandene Datenqualität an den Empfänger zu senden.

Die Verarbeitungseinheit kann auch als Prozessor bezeichnet werden.

Die Empfangseinheit kann ausgebildet sein, die geforderte Datenqualität von einem Speicher oder direkt von dem Empfänger zu empfangen.

Die Sendeeinheit kann als eine Kommunikationsschnittstelle ausgebildet sein.

Die Erfindung umfasst außerdem ein System aufweisend eine erfindungsgemäße Sensoreinheit und einen zugehörigen Empfänger.

Die Erfindung bietet zusammengefasst die folgenden Vorteile:
- Eine verbesserte Rückverfolgbarkeit von Events aufgrund datenqualitätsbasierter Sensorkommunikation und Übertragung von Sensordaten und Messwerten.
- Eine optimierte Sensordaten-Kommunikation bei einschränkenden Randbedingungen, insbesondere Energiebudget und Kommunikationsbandbreite.
- Optimierungsmöglichkeit, insbesondere der Kommunikationsbandbreite: Es kann eine kleinere Bandbreite genügen, da im Mittel weniger Daten zu übertragen sind und nur im Fehlerfall mehr Daten übertragen werden.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

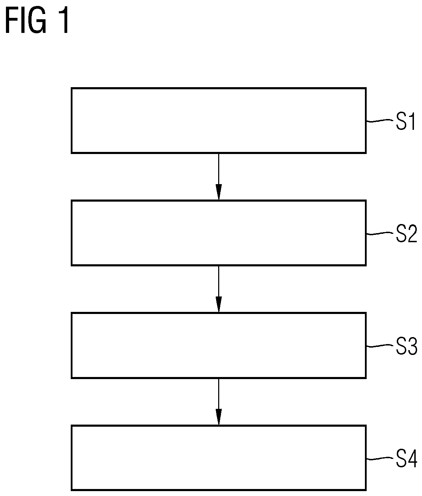

Es zeigt
- Fig. 1: ein Ablaufdiagramm des erfindungsgemäßen Verfahrens.

### DETAILLIERTE BESCHREIBUNG DER ERFINDUNG

Fig. 1 zeigt ein Ablaufdiagramm des erfindungsgemäßen Verfahrens mit den Schritten:
- Schritt S1: Messen von Messwerten durch eine Sensoreinheit, wobei den Messwerten eine vorhandene Datenqualität, welche ein Qualitätsmaß der Messwerte ist, zugeordnet ist,
- Schritt S2: Empfangen einer von einem Empfänger geforderte Datenqualität,
- Schritt S3: Verarbeiten der Messwerte in Abhängigkeit der vorhandenen Datenqualität und der geforderten Datenqualität zu vorverarbeiteten Sensordaten und
- Schritt S4: Senden der vorverarbeiteten Sensordaten und der vorhandenen Datenqualität an den Empfänger.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zur Übertragung von vorverarbeiteten Sensordaten mit den Schritten:
- Messen (S1) von Messwerten durch eine Sensoreinheit, wobei den Messwerten eine vorhandene Datenqualität, welche ein Qualitätsmaß der Messwerte ist, zugeordnet ist,
- Empfangen (S2) einer von einem Empfänger geforderte Datenqualität,
- Verarbeiten (S3) der Messwerte in Abhängigkeit der vorhandenen Datenqualität und der geforderten Datenqualität zu vorverarbeiteten Sensordaten und
- Senden (S4) der vorverarbeiteten Sensordaten und der vorhandenen Datenqualität an den Empfänger.

2. Verfahren nach Anspruch 1,
mit den weiteren Schritten:
- Empfangen einer Rückmeldung von dem Empfänger,
- Verarbeiten der Messwerte in Abhängigkeit der Rückmeldung zu weiteren vorverarbeiteten Sensordaten und
- Senden der weiteren vorverarbeiteten Sensordaten und der vorhandenen Datenqualität an den Empfänger.

3. Verfahren nach einem der vorhergehenden Ansprüche,
mit den weiteren Schritten:
- Empfangen einer zweiten Rückmeldung von dem Empfänger und
- Senden der Messwerte und der vorhandenen Datenqualität an den Empfänger.

4. Verfahren nach einem der vorhergehenden Ansprüche mit dem weiteren Schritt:
- Speichern der Messwerte durch die Sensoreinheit.

5. Verfahren nach einem der vorhergehenden Ansprüche,
wobei die Sensoreinheit und der Empfänger das gleiche Kommunikationsprotokoll verwenden.

6. Verfahren nach einem der vorhergehenden Ansprüche,
wobei die vorhandene Datenqualität von der Sensoreinheit bestimmt wird.

7. Verfahren nach einem der vorhergehenden Ansprüche, wobei die vorhandene Datenqualität durch:
- einen Algorithmus zur Anomaliedetektion und/oder
- einen maschinellen Lern-Algorithmus
bestimmt wird.

8. Verfahren nach einem der vorhergehenden Ansprüche,
wobei der Empfänger als:
- Gateway-Gerät,
- Cloud-Server,
- Fog-Server oder
- Edge-Device
ausgebildet ist.

9. Verfahren nach einem der vorhergehenden Ansprüche,
mit dem weiteren Schritt:
- Abrufen von gewünschten Sendeintervallen vom Empfänger.

10. Verfahren nach einem der vorhergehenden Ansprüche,
wobei mit den vorverarbeiteten Sensordaten außerdem Daten aus dem Schritt des Verarbeitens der Messwerte in Abhängigkeit der vorhandenen Datenqualität und des geforderten Datenqualität gesendet werden.

11. Verfahren nach einem der vorhergehenden Ansprüche,
wobei das Verarbeiten der Sensordaten:
- eine Aggregation und/oder
- eine Filterung und/oder
- eine Komprimierung und/oder
- eine Berechnung des Root-Means-Square-Values (RMS-Wert) umfasst.

12. Verfahren nach einem der vorhergehenden Ansprüche, mit dem weiteren Schritt:
- Empfangen einer Qualitätsskala anhand welcher die Datenqualität skaliert ist.

13. Sensoreinheit ausgebildet ein Verfahren nach einem dem vorherigen Anspruch auszuführen.

14. Sensoreinheit nach Anspruch 13, aufweisend:
- ein Messelement, ausgebildet, Messwert zu messen, wobei den Messwerten eine vorhandene Datenqualität, welche ein Qualitätsmaß der Messwerte ist, zugeordnet ist,
- eine Empfangseinheit, ausgebildet, eine von einem Empfänger geforderte Datenqualität zu empfangen,
- Verarbeitungseinheit, ausgebildet, die Messwerte in Abhängigkeit der vorhandenen Datenqualität und der geforderten Datenqualität zu vorverarbeiteten Sensordaten zu verarbeiten und
- Sendeeinheit, ausgebildet, die vorverarbeiteten Sensordaten und die vorhandene Datenqualität an den Empfänger zu senden.

15. System aufweisend eine Sensoreinheit nach einem der Ansprüche 13 oder 14 und einen zugehörigen Empfänger.
